# EUROPEAN PATENT SPECIFICATION

(11) **EP 2 042 696 B1**
(45) Date of publication and mention of the grant of the patent: **28.03.2012**
(21) Application number: 08015232.5
(22) Date of filing: 28.08.2008
(51) Int. Cl.: F01N 3/08, F01N 9/00

(54) **Exhaust emission purification system for internal combustion engine**
Abgasreinigungssystem für einen Verbrennungsmotor
Système de purification d'émission d'échappement pour moteur à combustion interne

(30) Priority: 26.09.2007 JP 2007248904
(43) Date of publication of application: 01.04.2009
(73) Proprietor: HONDA MOTOR CO., LTD., Tokyo 107-8556 (JP)
(72) Inventor: Mondori, Fumihiro, Wako-shi, Saitama, 351-0193 (JP); Ohno, Hiroshi, Wako-shi, Saitama, 351-0193 (JP)
(74) Representative: Prechtel, Jörg

(56) References cited:
- EP-A- 1 148 215
- WO-A-03/031780
- DE-A1- 19 753 573
- DE-A1-102004 018 648
- JP-A- 2006 102 628
- US-A1- 2006 053 776

## Description

This application is based on and claims the benefit of priority from Japanese Patent Application No. 2007-248904, filed on 26 September 2007, the content of which is incorporated herein by reference.

### BACKGROUND OF THE INVENTION

### Field of the Invention

The present invention relates to an exhaust emission purification system for an internal combustion engine. More particularly, the present invention relates to an exhaust emission purification system for an internal combustion engine, which is provided with a NOx absorbent catalyst for absorbing NOx in exhaust gas.

### Related Art

A technique for reducing the amount of emission of NOx (nitrogen oxide) is conventionally known, in which a NOx purification device is provided for an exhaust system of an internal combustion engine, thereby absorbing NOx in exhaust gas. On the other hand, in exhaust gas exhausted from the internal combustion engine, SOx (sulfur oxide) is included in addition to NOx, SOx being generated by oxidation of sulfur contained in fuel and engine oil. When such SOx in exhaust gas is absorbed by the NOx purification device, the cleanup performance of the NOx purification device is deteriorated.

For this reason, an exhaust emission purification system has been conventionally proposed, in which a SOx absorbent for absorbing SOx is provided on the upstream side of a NOx purification device, thereby reducing the amount of SOx which flows into the NOx purification device (see Japanese Unexamined Patent Application, First Publication No. 2006-329018). However, when, for example, absorption performance of the SOx absorbent is deteriorated due to aging deterioration and the like, SOx leaks from the SOx absorbent. As a result, SOx is absorbed to the NOx purification device provided on the downstream side of the SOx absorbent. For this reason, is cases where the cleanup performance of the NOx purification device may be deteriorated, or has been deteriorated, it is preferable to appropriately recover the cleanup performance.

Accordingly, for example, Japanese Unexamined Patent Application, First Publication No. 2006-138223 discloses an exhaust emission purification system, in which extra SOx absorbent is held in advance, and when it is presumed that the SOx retention capacity by the main SOx absorbent is deteriorated, SOx absorbent is newly supplied. This prevents the deterioration of the performance of the NOx purification device due to absorption of SOx onto the NOx purification device.

WO 03/031780 A discloses an exhaust emission purification system comprising: a NOx absorbent catalyst, a SOx absorbent disposed upstream of the NOx absorbent catalyst, and a SOx desorption temperature of the absorbent being higher than that of the NOx absorbent catalyst; a NOx concentration detecting means downstream of the NOx absorbent catalyst; a regeneration determination means for determining whether to execute a desulfation process for the NOx absorbent catalyst on the basis of the detected NOx concentration; and a regeneration execution means for changing the exhaust gas into a high temperature reducing atmosphere.

US 2006/053776 A1 teaches to perform NOx desorption and SOx desorption simultaneously at about the same temperature and to bypass the released sulfur around the NOx absorbent catalyst.

EP 1 148 215 A1 discloses a process that also avoids the flow of exhaust gas through the NOx absorbent catalyst in case of a regeneration of the SOx absorbent. If the SOx absorbent is regenerated, the exhaust gas is passed through a bypass pipe.

### SUMMARY OF THE INVENTION

However, in the exhaust emission purification system as described above, it is necessary to newly provide a holding means for holding SOx absorbent in order to newly supply SOx, and a supplying means for supplying SOx absorbent held by this holding means. Accordingly, it is understood that the holding means and the supplying means increase the size of the device and increase the cost.

Moreover, it is conceivable to provide SOx absorbent with high capacity, in addition to this exhaust emission purification system. However, in order to improve capacity of the SOx absorbent, it is required to increase the size of a substrate that supports the SOx absorbent. Accordingly, it is understood that the size of the device is increased and the manufacturing cost is increased in this case as well.

It is an object of the present invention to provide an exhaust emission purification system for an internal combustion engine, which can appropriately recover the cleanup performance of the NOx purification device and avoid reduction of the effectiveness of the SOx desorption regeneration of the NOx absorbent catalyst.

This object is achieved by an exhaust emission purification system having the features of claim 1.

According to a first alternative, the present invention provides an exhaust emission purification system for an internal combustion engine, comprising: an NOx absorbent catalyst disposed in an exhaust passage of the internal combustion engine, the absorbent absorbing NOx in exhaust gas; an SOx absorbent disposed in an upstream side of the NOx absorbent catalyst in the exhaust passage, the absorbent absorbing SOx in the exhaust gas; a regeneration determination means for determining whether to execute a regeneration process for the NOx absorbent catalyst so as to desorb SOx that has been absorbed to the NOx absorbent catalyst; a regeneration execution means for changing the exhaust gas into a high temperature reducing atmosphere in cases where the regeneration determination means determines to execute the regeneration process for the NOx absorbent catalyst; and an SOx concentration detecting means for detecting SOx concentration in the exhaust gas that circulates between the SOx absorbent and the NOx absorbent catalyst in the exhaust passage; wherein the determination of the regeneration determination means is based on the SOx concentration detected by the SOx concentration detecting means; and an SOx desorption temperature of the SOx absorbent is higher than an SOx desorption temperature of the NOx absorbent catalyst, wherein the temperature of said high temperature reducing atmosphere is set higher than the SOx desorption temperature of the NOx absorbent catalyst to desorb SOx that has been absorbed to the NOx absorbent catalyst, but is set such as to not desorb SOx from the SOx absorbent.

With this configuration, for example, when the SOx absorption performance of the SOx absorbent is deteriorated due to aging degradation and the like, thereby leaking SOx from the SOx absorbent, the SOx concentration on the downstream side of the SOx absorbent of the exhaust passage is increased. The increase of the SOx concentration is detected by the SOx concentration detecting means for detecting the SOx concentration in the section between the SOx absorbent and the NOx absorbent catalyst. On the basis of the detection of the SOx concentration, it is determined whether to execute a regeneration process of the NOx absorbent catalyst. When it is determined to execute a regeneration process, the exhaust gas is changed into a high temperature reducing atmosphere, thereby desorbing SOx that has been absorbed to the NOx absorbent catalyst. This makes it possible to recover the NOx cleanup performance of the NOx absorbent catalyst, even in cases where the SOx absorption performance of the SOx absorbent is deteriorated.

Moreover, since the SOx desorption temperature of the SOx absorbent used here is higher than the desorption temperature of the NOx absorbent catalyst, SOx is not desorbed from the SOx absorbent, even if the exhaust gas is changed into the high temperature reducing atmosphere in the regeneration process. Therefore, it is not necessary to newly provide a passage and the like for bypassing the NOx absorbent catalyst in order to prevent the deterioration of the cleanup performance of the NOx absorbent catalyst. In this way, newly providing the SOx concentration detecting means, the regeneration determination means, and the regeneration execution means, suffices in order to appropriately recover the cleanup performance of the NOx absorbent catalyst. Accordingly, the size of the device is not increased, and the manufacturing cost is not increased either. Moreover, when the exhaust gas is changed into a high temperature reducing atmosphere in the regeneration process, for example, a post injection is carried out. According to the present invention, it is determined whether to execute a regeneration process on the basis of the SOx concentration detected by the SOx concentration detecting means. This makes it possible to minimize the number of regeneration processes to be executed. Accordingly, it is possible to minimize the consumption of a fuel required for execution of regeneration processes and to minimize the thermal degradation of the catalyst provided to the exhaust passage.

According to a second alternative, the present invention further provides an exhaust emission purification system for an internal combustion engine, comprising: an NOx absorbent catalyst disposed in an exhaust passage of the internal combustion engine, the absorbent absorbing NOx in exhaust gas; an SOx absorbent disposed in an upstream side of the NOx absorbent catalyst in the exhaust passage, the absorbent absorbing SOx in the exhaust gas; an NOx concentration detecting means for detecting NOx concentration in the exhaust gas that circulates in a downstream side of the NOx absorbent catalyst in the exhaust passage; a regeneration determination means for determining whether to execute a regeneration process for the NOx absorbent catalyst so as to desorb SOx that has been ' absorbed to the NOx absorbent catalyst, on the basis of the NOx concentration detected by the NOx concentration detecting means; and a regeneration execution means for changing the exhaust gas into a high temperature reducing atmosphere in cases where the regeneration determination means determines to execute the regeneration process for the NOx absorbent catalyst ; wherein an SOx desorption temperature of the SOx absorbent is higher than an SOx desorption temperature of the NOx absorbent catalyst, and the temperature of said high temperature reducing atmosphere is set higher than the SOx desorption temperature of the NOx absorbent catalyst to desorb SOx that has been absorbed to the NOx absorbent catalyst, but is set such as to not desorb SOx from the SOx absorbent.

With this configuration, for example, the SOx absorption performance of the SOx absorbent is deteriorated due to aging degradation and the like, SOx leaks from the SOx absorbent. As a result, SOx is absorbed to the NOx absorbent catalyst provided on the downstream side of the SOx absorbent, and the cleanup performance of the NOx absorbent catalyst begins to deteriorate. When the cleanup performance of the NOx absorbent catalyst is deteriorated, the NOx concentration in the downstream side of the NOx absorbent catalyst is increased as compared to the normal state. Then the NOx concentration detecting means detects the NOx concentration in the downstream side of the NOx absorbent catalyst. On the basis of the detection of the NOx concentration, it is determined whether to execute a regeneration process of the NOx absorbent catalyst. When it is determined to execute the regeneration process, the exhaust gas is changed into a high temperature reducing atmosphere, thereby desorbing SOx that has been absorbed to the NOx absorbent catalyst. This makes it possible to recover the NOx cleanup performance of the NOx absorbent catalyst, even in cases where the SOx absorption performance of the SOx absorbent is deteriorated.

Moreover, since the SOx desorption temperature of the SOx absorbent used here is higher than the desorption temperature of the NOx absorbent catalyst, SOx is not desorbed from the SOx absorbent, even if the exhaust gas is changed into the high temperature reducing atmosphere in the regeneration process. Therefore, it is not necessary to newly provide a passage and the like for bypassing the NOx absorbent catalyst in order to prevent the deterioration of the cleanup performance of the NOx absorbent catalyst. In this way, newly providing the NOx concentration detecting means, the generation determination means, and the regeneration execution means, suffices in order to appropriately recover the cleanup performance of the NOx absorbent catalyst. Accordingly, the size of the device is not increased, and the manufacturing cost is not increased either. Moreover, when the exhaust gas is changed into a high temperature reducing atmosphere in the regeneration process, for example, a post injection is carried out. According to the present invention, it is determined whether to execute a regeneration process on the basis of the NOx concentration detected by the NOx concentration detecting means. This makes it possible to minimize the number of regeneration processes to be executed. Accordingly, it is possible to minimize the consumption of fuel required for execution of regeneration processes and to minimize the thermal degradation of the catalyst provided to the exhaust passage.

According to a third alternative, the present invention further provides an exhaust emission purification system for an internal combustion engine, comprising: an NOx absorbent catalyst disposed in an exhaust passage of the internal combustion engine, the absorbent absorbing NOx in exhaust gas; an SOx absorbent disposed in an upstream side of the NOx absorbent catalyst in the exhaust passage, the absorbent absorbing SOx in the exhaust gas; a regeneration determination means for determining whether to execute a regeneration process for the NOx absorbent catalyst so as to desorb SOx that has been absorbed to the NOx absorbent catalyst; a regeneration execution means for changing the exhaust gas into a high temperature reducing atmosphere in cases where the regeneration determination means determines to execute the regeneration process for the NOx absorbent catalyst; and an air-fuel ratio detecting means for detecting an air-fuel ratio in the exhaust gas that circulates in a downstream side of the NOx absorbent catalyst in the exhaust passage; wherein the determination of the regeneration determination means is based on the air-fuel ratio detected by the air-fuel ratio detecting means; and an SOx desorption temperature of the SOx absorbent is higher than an SOx desorption temperature of the NOx absorbent catalyst, wherein the temperature of said high temperature reducing atmosphere is set higher than the SOx desorption temperature of the NOx absorbent catalyst to desorb SOx that has been absorbed to the NOx absorbent catalyst, but is set such as to not desorb SOx from the SOx absorbent.

With this configuration, for example, the SOx absorption performance of the SOx absorbent is deteriorated due to aging degradation and the like, SOx leaks from the SOx absorbent. As a result, SOx is absorbed to the NOx absorbent catalyst provided on the downstream side of the SOx absorbent, and the cleanup performance of the NOx absorbent catalyst begins to deteriorate. When the cleanup performance of the NOx absorbent catalyst is deteriorated, the air-fuel ratio of the NOx absorbent catalyst on the downstream side of the NOx absorbent catalyst becomes different from that in the normal state. Then, the air-fuel ratio detecting means detects the air-fuel ratio of the NOx absorbent catalyst on the downstream side. On the basis of the air-fuel ratio, it is determined whether to execute a regeneration process of the NOx absorbent catalyst. When it is determined to execute the regeneration process, the exhaust gas is changed into a high temperature reducing atmosphere, thereby desorbing SOx that has been absorbed to the NOx absorbent catalyst. This makes it possible to recover the NOx cleanup performance of the NOx absorbent catalyst, even in cases where the SOx absorption performance of the SOx absorbent is deteriorated.

Moreover, since the SOx desorption temperature of the SOx absorbent used here is higher than the desorption temperature of the NOx absorbent catalyst, SOx is not desorbed from the SOx absorbent, even if the exhaust gas is changed into the high temperature reduction atmosphere in the regeneration process. Therefore, it is not necessary to newly provide a passage and the like for bypassing the NOx absorbent catalyst in order to prevent the deterioration of the cleanup performance of the NOx absorbent catalyst. In this way, newly providing the air-fuel ratio detecting means, the recycling determining means, and the recycling executing means, suffices in order to appropriately recover the cleanup performance of the NOx absorbent catalyst. Accordingly, the size of the device is not increased, and the manufacturing cost is not increased either. Moreover, when the exhaust gas is changed into a high temperature reducing atmosphere in the regeneration process, for example, a post injection is carried out. According to the present invention, it is determined whether to execute a regeneration process on the basis of the air-fuel ratio detected by the air-fuel ratio detecting means. This makes it possible to minimize the number of regeneration processes to be executed. Accordingly, it is possible to minimize the consumption of fuel required for execution of regeneration processes and to minimize the thermal degradation of the catalyst provided to the exhaust passage.

Preferably, the SOx absorbent does not substantially comprise precious metals.

With this configuration, the SOx absorbent does not substantially include precious metals. This makes it possible to further increase the SOx desorption temperature of the SOx absorbent. This prevents SOx from being desorbed from the SOx absorbent even if, for example, the exhaust gas is changed into a high temperature reducing atmosphere, thereby making it possible to prevent deterioration of the NOx absorbent catalyst, which is provided on the downstream side, due to absorption of SOx.

Preferably, a substrate of the SOx absorbent does not substantially comprise silica.

With this configuration, the substrate that supports the SOx absorbent does not substantially include silica. This prevents reaction of silica and alkali. This makes it possible to use a SOx absorbent of which the alkalinity is high and which SOx desorption temperature is high. This makes it possible to prevent deterioration of the NOx absorbent catalyst, which is provided on the downstream side of the SOx absorbent, due to absorption of SOx.

Preferably, the NOx absorbent catalyst is a catalyst which generates ammonia and absorbs the generated ammonia when the air-fuel ratio of the exhaust gas is rich, and which reduces NOx to elements thereof with the absorbed ammonia when the air-fuel ratio of the exhaust gas is lean.

With this configuration, the catalyst, which is used as the catalyst of the NOx absorbent catalyst, generates ammonia when the air-fuel ratio is rich, and reduces NOx to its elements when the air-fuel ratio is lean. This makes it possible to lower the SOx desorption temperature of the NOx absorbent catalyst. Accordingly, it is possible to further increase the temperature difference between the SOx desorption temperature of the SOx absorbent and the SOx desorption temperature of the NOx absorbent catalyst. This makes it possible to more securely prevent SOx from being desorbed from the SOx absorbent at the time of desorbing SOx that has been absorbed to the NOx absorbent catalyst.

Preferably, a three-way catalyst is disposed in an upstream side of the SOx absorbent in the exhaust passage.

With this configuration, a three-way catalyst is provided on the upstream side of the SOx absorbent. This makes it possible to clean up NOx with this three-way catalyst, even in cases where the exhaust gas is changed into a high temperature reducing atmosphere at the time of desorbing SOx from the NOx absorbent catalyst. Particularly here, if the catalyst as described above, which is used as the catalyst for the NOx absorbent catalyst, generates ammonia when the air-fuel ratio is rich, and converts NOx into nitrogen when the air-fuel ratio is lean, the NOx cleanup efficiency under the high temperature reducing atmosphere is decreased. Accordingly, it is possible to compensate for the deterioration of the NOx cleanup efficiency under the high temperature reducing atmosphere by providing such a three-way catalyst.

### BRIEF DESCRIPTION OF THE DRAWINGS

FIG.1 is a diagram showing a configuration of an internal combustion engine and its control unit according to a first embodiment of the present invention;
FIG.2 is a diagram showing a configuration of an internal combustion engine and its control unit according to a second embodiment of the present invention; and
FIG.3 is a diagram showing a configuration of an internal combustion engine and its control unit according to a third embodiment of the present invention.

### DETAILED DESCRIPTION OF THE INVENTION

### First Embodiment

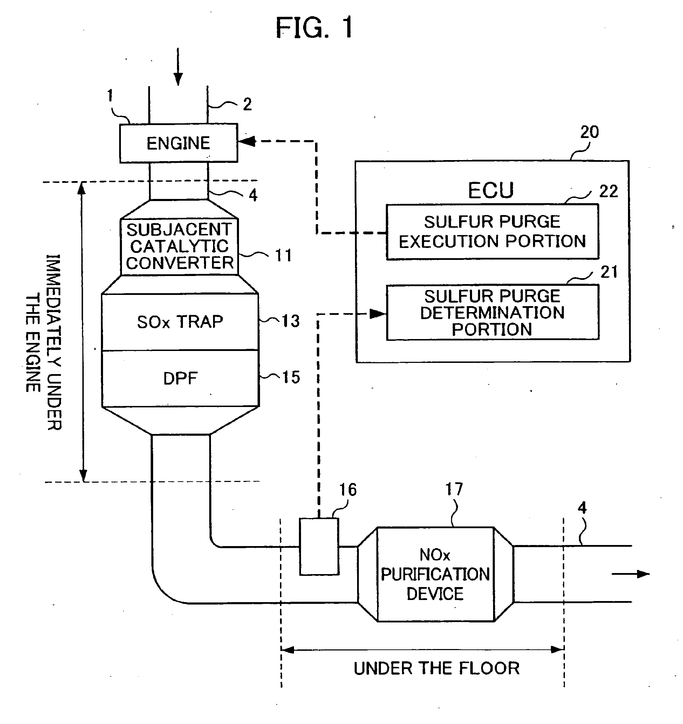

A first embodiment of the present invention is described with reference to an attached drawing. FIG.1 is a diagram showing a configuration of an internal combustion engine and its control unit, which are provided with an exhaust emission purification system according to the first embodiment of the present invention. An internal combustion engine 1 (hereinafter merely referred to as an engine) is a diesel engine that directly injects fuel into each cylinder. Fuel injectors are provided to the respective cylinders. An electronic control unit 20 (hereinafter referred to as ECU) is electrically connected these fuel injectors. The ECU 20 controls a valve-opening time and a valve-closing time of the fuel injectors.

The engine 1 is provided with an intake pipe 2 through which intake air circulates, and an exhaust pipe 4 through which exhaust gas circulates. The intake pipe 2 is connected to intake ports of the respective cylinders of the engine 1. The exhaust pipe 4 is connected to exhaust ports of the respective cylinders of the engine 1.

An intercooler for cooling pressurized air and a throttle valve for controlling intake air volume are provided in the intake pipe 2. The throttle valve is connected through an actuator to the ECU 20, and its valve opening degree is electromagnetically controlled by the ECU 20.

As for the exhaust pipe 4, in the section which extends from the exhaust ports of the engine 1 and is located immediately under the engine 1, there are provided a subjacent catalytic converter 11, a SOx trap 13, and a particulate trap device 15 (hereinafter referred to as "DPF" (Diesel Particulate Filter)) in this order from the upstream side. On the other hand, in the section which is located in the downstream side of the DPF 15 and is located under the floor, a NOx purification device 17 is provided.

The subjacent catalytic converter 11 has a three-way catalyst, and cleans up the exhaust gas by reaction of this catalyst and the exhaust gas. More specifically, the subjacent catalytic converter 11 has the three-way catalyst that is made by causing an alumina (Al₂O₃) substrate to support precious metals such as platinum (Pt), palladium (Pd), rhodium (Rh) and the like acting as a catalyst, and adding thereto ceria with NOx adsorptivity. By using such a three-way catalyst while lean, NOx is trapped and hydrocarbon (HC) is oxidized into carbon monoxide (CO). On the other hand, while rich, NOx is released, and cleaned up by reduction into nitrogen (N₂). This makes it possible to reduce the amount of NOx emissions.

The SOx trap 13 absorbs SOx in exhaust gas, and is formed by supporting SOx trap materials to a porous substrate, the SOx trap materials having a higher desorption temperature of SOx than that of the catalyst of the NOx purification device 17 to be described later. More specifically, it is desirable that the substrate of the SOx trap materials does not substantially include silica, is configured mainly with, for example, alumina particles and alumina fibers, and is configured as a honeycomb of 400 g/L and 400 cells/square inch.

More specifically, this SOx trap 13 is made by impregnating the aforementioned porous substrate into a mixed solution, and calcining the substrate in an atmosphere at 600 degrees Celsius for one hour. The mixed solution is composed of potassium nitrate of alkali metal compound and calcium nitrate tetrahydrate of alkaline earth compound, which are converted into potassium weight and calcium weight of 45 g/L, respectively. Moreover, it is desirable that the SOx trap materials do not substantially include precious metals.

When the exhaust gas passes through minute pores of the filter wall, the DPF 15 accumulates soot as particulates on the surface of the filter wall and in the pores of the filter wall, thereby capturing the soot, the main component of the soot being carbon in the exhaust gas. As the construction material of the filter wall, for example, ceramics such as silicon carbide (SiC) as well as porous metals are used.

When the soot is captured to the capacity of the soot-capturing ability (i.e. accumulation limit) of the DPF 15, the exhaust pressure increases. Accordingly, it is required to regenerate the DPF by burning the soot as appropriate. This DPF regeneration is performed by post-injection to increase the temperature of the exhaust gas to the combustion temperature of the soot.

The NOx purification device 17 is provided with platinum (Pt) acting as a catalyst supported on an alumina (Al₂O₃) substrate, ceria having a NOx adsorption capability, and a zeolite having a function to hold ammonia (NH₃) in the exhaust gas as an ammonium ion (NH₄⁺).

It is preferable that the SOx desorption temperature of this NOx purification device 17 be lower than the SOx desorption temperature of the abovementioned SOx trap 13. More specifically, it is desirable that the temperature difference of the SOx desorption temperatures between the NOx purification device 17 and the SOx trap 13 be not less than 200 degrees Celsius.

When the amount of adsorbed ammonia in the NOx purification device 17 is decreased, the NOx cleanup performance is deteriorated. Accordingly, the reducing agent is supplied to the NOx purification device 17 in order to appropriately reduce NOx to elements thereof (this supply of the reducing agent is hereinafter referred to as "reduction"). In this reduction, the reducing agent is supplied to the NOx purification device 17, by increasing the fuel level injected by the fuel injectors, and by decreasing the intake air volume by the throttle valve, thereby causing the air-fuel ratio of the fuel/air mixture in the combustion chamber to be richer than the theoretic mixture ratio. That is to say, the air-fuel ratio is made richer, as a result of which the concentration of the reducing agent in the exhaust gas that flows into the NOx purification device 17 becomes higher than the oxygen concentration, thereby carrying out the reduction.

The cleanup of NOx in this NOx purification device 17 is described. At first, the air-fuel ratio of the fuel/air mixture burning in the engine 1 is set to be leaner than the theoretic mixture ratio, thereby carrying out the so-called lean burn operation. As a result, the concentration of the reducing agent in the exhaust gas that flows into the NOx purification device 17 is made lower than the oxygen concentration. As a result, carbon monoxide (CO) and oxygen (O₂) in the exhaust gas react with each other by an action of the catalyst, and are adsorbed as NO₂ to ceria. Moreover, oxygen that has not been reacted with carbon monoxide (CO) is also adsorbed to ceria.

Next, when reduction is carried out in which the concentration of the reducing agent in the exhaust gas is higher than the oxygen concentration, carbon monoxide (CO) in the exhaust gas reacts with water (H₂O) to generate carbon dioxide (CO₂) and hydrogen (H₂), and hydrocarbon (HC) in the exhaust gas reacts with water to generate carbon monoxide (CO) and carbon dioxide (CO₂) as well as hydrogen. Furthermore, NOx included in the exhaust gas, NOx (NO, NO₂) adsorbed to ceria (and to platinum), and the generated hydrogen react by action of the catalyst to generate ammonia (NH₃) and water. Moreover, thus generated ammonia is adsorbed in the form of the ammonium ion (NH₄⁺) to zeolite.

Next, when a lean burn operation is performed in which the air-fuel ratio is set to be leaner than the theoretic mixture ratio, and the concentration of the reducing agent in the exhaust gas that flows into the NOx purification device 17 is set to be lower than the oxygen concentration, NOx is adsorbed to ceria. In addition, in a state where ammonium ion is adsorbed to zeolite, NOx and oxygen in the exhaust gas react with ammonia to generate nitrogen (N₂) and water.

In this way, with the NOx purification device 17, ammonia that is generated while supplying the reducing agent is adsorbed to zeolite, and the adsorbed ammonia reacts with NOx during the lean burn operation. Accordingly, it is possible to efficiently clean up NOx.

The desorption of SOx absorbed to this NOx purification device 17 is described. When the SOx absorption performance of the SOx trap 13 is deteriorated due to aging degradation and the like, SOx leaks from the SOx trap 13. When this SOx is absorbed to the NOx purification device 17, the NOx cleanup performance of the NOx purification device 17 is deteriorated. Accordingly, it is necessary to perform regeneration (hereinafter referred to as "sulfur purge") of the NOx purification device 17 in order to desorb SOx that has been absorbed to the NOx purification device 17. This sulfur purge is performed by carrying out the post-injection control, and by increasing the temperature of the exhaust gas to the SOx desorption temperature of the NOx purification device 17. In this post-injection control, in addition to normal injection in the compression stroke, a post-injection is performed by the fuel injector in the subsequent combustion stroke and the exhaust stroke.

Volumes of the subjacent catalytic converter 11, the SOx trap 13, the DPF 15, and the NOx purification device 17 as described above are determined by considering, for example, the cleanup performance for HC, CO and the NOx in the exhaust gas, the collection efficiency for the particulates, the absorption quantity of SOx, the pressure loss of the exhaust pipe 4, and the like. More specifically, for example, the volumes of the subjacent catalytic converter 11, the SOx trap 13, the DPF 15 and the NOx purification device 17 are 0.7L, 1.4L, 2.1L and 2.0L, respectively.

Moreover, as for the exhaust pipe 4, a SOx sensor 16 as a SOx concentration detecting means is provided between the DPF 15 and the NOx purification device 17. This SOx sensor 16 detects the SOx concentration in the exhaust gas that circulates between the SOx trap 13 and the NOx purification device 17, and supplies a detection signal, which is substantially proportionate to the detected SOx concentration, to the ECU 20.

The ECU 20 is provided with an input circuit and a central processing unit (hereinafter referred to as "CPU"). The input circuit has functions for shaping the input signal wave forms from various sensors, correcting voltage levels to predetermined levels, converting analog signal values into digital signal values, and performing the like. In addition, the ECU 20 is provided with a storage circuit for storing various operation programs executed inside the CPU and the results thereof and the like, and an output circuit for outputting a control signal to the fuel injector of the engine 1 and the like.

Moreover, the ECU 20 is provided with a plurality of control blocks that function with a hardware configuration including the input circuit, the CPU, the storage circuit, the output circuit and the like. More specifically, the ECU 20 is provided with a sulfur purge determination portion 21 as a regeneration determination means and a sulfur purge execution portion 22 as a regeneration execution means.

The sulfur purge determination portion 21 determines whether to execute a sulfur purge on the basis of the SOx concentration detected by the SOx sensor 16. More specifically, the sulfur purge determination portion 21 estimates an amount of SOx that has been absorbed to the NOx purification device 17 on the basis of the history of the SOx concentration detected by the SOx sensor 16, and determines whether to execute a sulfur purge of the NOx purification device 17 on the basis of this estimation.

In cases where the sulfur purge determination portion 21 determines to execute a sulfur purge of the NOx purification device 17, the sulfur purge execution portion 22 executes a post injection control, in which the temperature of the exhaust gas flowing into the NOx purification device 17 is changed into a high temperature reducing atmosphere, the temperature of which is higher than the SOx desorption temperature of the NOx purification device 17, thereby executing the sulfur purge of the NOx purification device.

As described in detail above, for example, in the present embodiment, when the SOx absorption performance of the SOx trap 13 is deteriorated due to aging degradation and the like, thereby leaking SOx from the SOx trap 13, the SOx concentration in the downstream side of the SOx trap 13 of the exhaust pipe 4 is increased. The increase of the SOx concentration is detected by the SOx sensor 16 that detects the SOx concentration in the section between the SOx trap 13 and the NOx purification device 17. On the basis of the detection of the SOx concentration, it is determined whether to execute a sulfur purge of the NOx purification device 17. When it is determined to execute a sulfur purge, the exhaust gas is changed into a high temperature reduction atmosphere, thereby desorbing SOx that has been absorbed to the NOx purification device 17. This makes it possible to recover the NOx cleanup performance of the NOx purification device 17, even in cases where the SOx absorption performance of the SOx trap 13 is deteriorated. Moreover, since the SOx desorption temperature of the SOx trap 13 used here is higher than the desorption temperature of the NOx purification device 17, SOx is not desorbed from the SOx trap 13 even if the exhaust gas is changed into the high temperature reducing atmosphere during the sulfur purge. Therefore, it is not necessary to newly provide a passage and the like for bypassing the NOx purification device 17 in order to prevent deterioration of the cleanup performance of the NOx purification device 17. In this way, newly providing the SOx sensor 16, the sulfur purge determination portion 21, and the sulfur purge execution portion 22, suffices in order to appropriately recover the cleanup performance of the NOx purification device 17. Accordingly, the size of the device is not increased, and the manufacturing cost is not increased either. Moreover, when the exhaust gas is changed into a high temperature reduction atmosphere in the sulfur purge, for example, a post injection is carried out. According to the present embodiment, it is determined whether to execute a sulfur purge on the basis of the SOx concentration detected by the SOx sensor 16. This makes it possible to minimize the number of sulfur purges to be executed. Accordingly, it is possible to minimize the consumption of fuel required for execution of sulfur purges and to minimize the thermal degradation of the catalyst provided to the exhaust pipe 4.

Moreover, the SOx trap materials used for the SOx trap 13 do not substantially include precious metals. This makes it possible to further increase the SOx desorption temperature of the SOx trap 13. This prevents SOx from being desorbed from the SOx trap 13 even if, for example, the exhaust gas is changed into a high temperature reducing atmosphere, thereby making it possible to prevent deterioration of the NOx purification device 17, which is provided in the downstream side, due to absorption of SOx.

Moreover, the substrate that supports the SOx trap materials used for the SOx trap 13 does not substantially include silica. This prevents reaction of silica and alkali. This makes it possible to use SOx trap materials of which the alkalinity is high and the SOx desorption temperature is high. This makes it possible to prevent deterioration of the NOx purification device 17, which is provided on the downstream side of the SOx trap 13, due to absorption of SOx.

Moreover, the catalyst, which is used as the catalyst of the NOx purification device 17, generates ammonia when the air-fuel ratio is rich, and reduces NOx to elements thereof when the air-fuel ratio is lean. This makes it possible to lower the SOx desorption temperature of the NOx purification device 17. Accordingly, it is possible to further increase the temperature difference between the SOx desorption temperature of the SOx trap 13 and the SOx desorption temperature of the NOx purification device 17. This makes it possible to more securely prevent SOx from being desorbed from the SOx trap 13 at the time of desorbing SOx that has been absorbed to the NOx purification device 17.

Moreover, the subjacent catalytic converter 11 having a three-way catalyst is provided on the upstream side of the SOx trap 13. This makes it possible to clean up NOx with this three-way catalyst, even in cases where the exhaust gas is changed into a high temperature reducing atmosphere at the time of desorbing SOx from the NOx purification device 17. Particularly here, if the catalyst as described above, which is used as the catalyst for the NOx purification device 17, generates ammonia when the air-fuel ratio is rich, and converts NOx into nitrogen when the air-fuel ratio is lean, the NOx cleanup efficiency under the high temperature reduction atmosphere is decreased. Accordingly, it is possible to compensate for the deterioration of the NOx cleanup efficiency under the high temperature reducing atmosphere by providing such a three-way catalyst.

### Second Embodiment

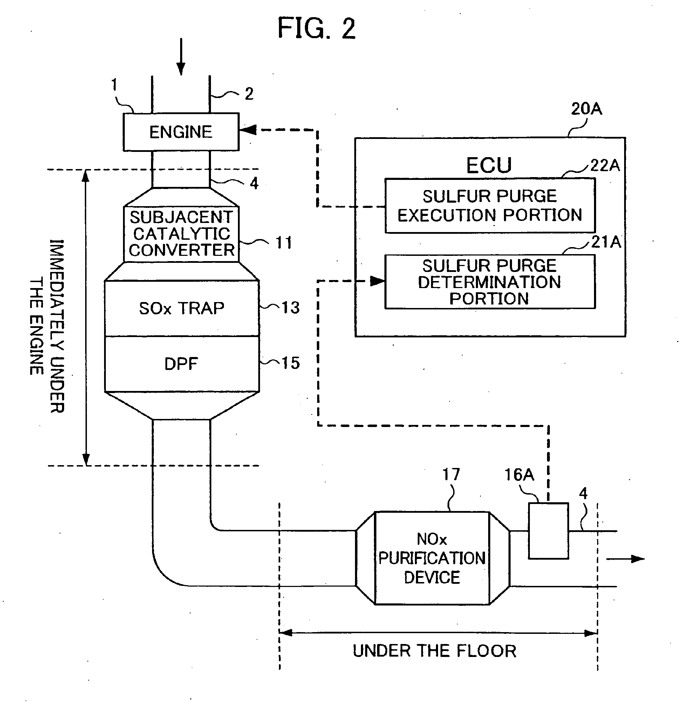

A second embodiment of the present invention is described with reference to an attached drawing. In describing the second embodiment as follows, constituent features that are the same as those of the first embodiment are assigned the same reference symbols, and descriptions thereof is omitted or simplified. FIG.2 is a diagram showing a configuration of an internal combustion engine and its control unit, which are provided with an exhaust emission purification system according to the second embodiment of the present invention. In the present embodiment, a NOx sensor 16A is provided in place of the SOx sensor 16 of the exhaust emission purification system according to the first embodiment.

As for the exhaust pipe 4, a NOx sensor 16A as a NOx concentration detecting means is provided on the downstream side of the NOx purification device 17. This NOx sensor 16A detects the NOx concentration in the exhaust gas that circulates on the downstream side of the NOx purification device 17, and supplies a detection signal, which is substantially proportionate to the detected NOx concentration, to an ECU 20A.

A sulfur purge determination portion 21A determines whether to execute a sulfur purge on the basis of the NOx concentration detected by the NOx sensor 16A. It is assumed here that, when SOx is absorbed to the NOx purification device 17, the NOx cleanup performance of the NOx purification device 17 is deteriorated depending on the absorbed amount thereof. The sulfur purge determination portion 21A estimates the deterioration of the NOx cleanup performance of the NOx purification device 17 on the basis of the NOx concentration detected by the NOx sensor 16A, thereby indirectly estimating an amount of SOx that has been absorbed to the NOx purification device 17. Based on this estimation, the sulfur purge determination portion 21A determines whether to execute a sulfur purge of the NOx purification device 17.

In cases where the sulfur purge determination portion 21A determines to execute a sulfur purge of the NOx purification device 17, a sulfur purge execution portion 22A executes a post injection control, whereby the temperature of the exhaust gas flowing into the NOx purification device 17 is changed into a high temperature reducing atmosphere, the temperature of which is higher than the SOx desorption temperature of the NOx purification device 17, thereby executing the sulfur purge of the NOx purification device 17.

As described in detail above, the exhaust emission purification system of the present embodiment achieves an effect similar to that of the exhaust emission purification system of the first embodiment.

### Third Embodiment

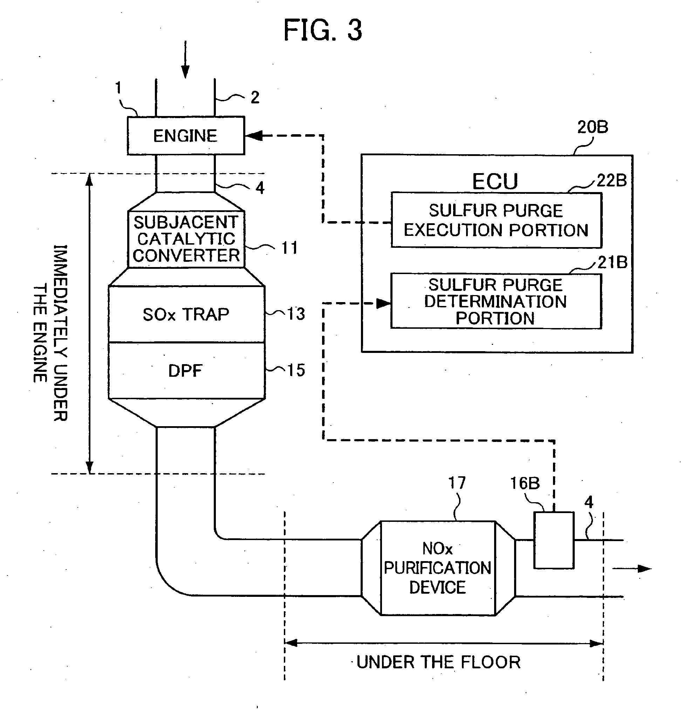

A third embodiment of the present invention is described with reference to an attached drawing. In describing the third embodiment as follows, constituent features that are the same as those of the first embodiment are assigned with the same reference symbols, and descriptions thereof are omitted or simplified. FIG.3 is a diagram showing a configuration of an internal combustion engine and its control unit, which are provided with an exhaust emission purification system according to the third embodiment of the present invention. In the present embodiment, an air-fuel ratio sensor (hereinafter referred to as "LAF sensors") 16B is provided in place of the SOx sensor 16 of the exhaust emission purification system according to the first embodiment.

As for the exhaust pipe 4, the LAF sensor 16B as an air-fuel ratio detecting means is provided on the downstream side of the NOx purification device 17. This LAF sensor 16B detects the oxygen concentration in the exhaust gas that circulates on the downstream side of the NOx purification device 17, and supplies a detection signal, which is substantially proportionate to the detected oxygen concentration, to the ECU 20A.

The sulfur purge determination portion 21B determines whether to execute a sulfur purge on the basis of the oxygen concentration detected by the LAF sensor 16B. More specifically, for example, at the time of increasing/decreasing the air-fuel ratio of the fuel/air mixture, the sulfur purge determination portion 21B monitors the response of the air-fuel ratio on the downstream side of NOx purification device 17 by the LAF sensor 16B, thereby estimating the deterioration of the NOx cleanup performance of the NOx purification device 17, and indirectly estimating an amount of SOx that has been absorbed to the NOx purification device 17. Based on this estimation, the sulfur purge determination portion 21B determines whether to execute a sulfur purge of the NOx purification device 17.

In cases where the sulfur purge determination portion 21B determines to execute a sulfur purge of the NOx purification device 17, a sulfur purge execution portion 22B executes a post injection control, whereby the temperature of the exhaust gas flowing into the NOx purification device 17 is changed into a high temperature reducing atmosphere, the temperature of which is higher than the SOx desorption temperature of the NOx purification device 17, thereby executing the sulfur purge of the NOx purification device 17.

As described in detail above, the exhaust emission purification system of the present embodiment achieves an effect similar to that of the exhaust emission purification system of the first embodiment.

It should be noted that the present invention is not limited to the aforementioned embodiments, and that various modifications are possible. For example, in the aforementioned embodiments, the subjacent catalytic converter 11, the SOx trap 13, the DPF 15, and the NOx purification device 17 are provided to the exhaust pipe 4 in this order from the upstream side. However, there is no limitation thereto as long as the SOx trap is provided on the upstream side of the NOx purification device, and the order may be different form the order in the embodiments. For example, the order from the upstream side may be the subjacent catalytic converter, the SOx trap, the NOx purification device, and the DPF, or may be the subjacent catalytic converter, the DPF, the SOx trap, and the NOx purification device.

Moreover, in the aforementioned embodiments, the subjacent catalytic converter 11, the SOx trap 13 and the DPF 15 are provided in the section located immediately after the engine, and the NOx purification device is provided in the section located under the floor, but there is no limitation thereto. For example, the subjacent catalytic converter, the SOx trap, the DPF and the NOx purification device may be provided in the section immediately after the engine, or the subjacent catalytic converter and the SOx trap may be provided immediately after the engine, while the DPF and the NOx purification device may be provided under the floor.

Moreover, the SOx sensor 16, the NOx sensor 16A and the air-fuel ratio sensor 16B are provided in the first to third embodiments, respectively; however, there is no limitation thereto, and any of the sensors may be combined. For example, in the second embodiment, only the NOx sensor is provided. In such a case, however, if the air-fuel ratio of the fuel/air mixture is increased/decreased for example, the NOx concentration in the exhaust gas that is exhausted from the NOx purification device also fluctuates, thereby making it difficult to estimate the cleanup performance of the NOx purification device. Thus, for example, the NOx sensor and the air-fuel ratio sensor are used in combination, thereby making it possible to estimate the cleanup performance with high accuracy.

Moreover, in the aforementioned embodiments, alumina is used as a main material of the substrate of the SOx trap 13. However, an alumina titanium series may be used as a main material of the substrate of the SOx trap.

Furthermore, it is also possible to apply the present invention to an exhaust emission purification system for an engine and the like for ship propulsion such as an outboard engine that has its crankshaft in the vertical direction. An exhaust emission purification system for an internal combustion engine, which can appropriately recover the cleanup performance of a NOx purification device that is disposed on the downstream side of a SOx absorbent is disclosed. The exhaust emission purification system is provided with a SOx trap 13, which is provided on an upstream side of a NOx purification device 17, and a SOx desorption temperature of the SOx trap 13 being higher than that of the NOx purification device 17; a sulfur purge determination portion 21 that determines whether to execute a sulfur.purge, on the basis of the SOx concentration detected by a SOx sensor 16; a sulfur purge execution portion 22 that changes the exhaust gas into a high temperature reducing atmosphere, in cases where a sulfur purge determination portion 21 determines to execute a sulfur purge of the NOx purification device 17.

## Claims

1. An exhaust emission purification system for an internal combustion engine (1), comprising:
an NOx absorbent catalyst (17) disposed in an exhaust passage (4) of the internal combustion engine (1), the absorbent absorbing NOx in exhaust gas;
an SOx absorbent (13) disposed in an upstream side of the NOx absorbent catalyst (17) in the exhaust passage (4), the absorbent absorbing SOx in the exhaust gas;
a regeneration determination means (20; 20A; 20B) for determining whether to execute a regeneration process for the NOx absorbent catalyst (17) so as to desorb SOx that has been absorbed to the NOx absorbent catalyst (17); and
a regeneration execution means (20; 20A; 20B) for changing the exhaust gas into a high temperature reducing atmosphere in cases where the regeneration determination means (20; 20A; 20B) determines to execute the regeneration process for the NOx absorbent catalyst (17);
wherein an SOx desorption temperature of the SOx absorbent (13) is higher than an SOx desorption temperature of the NOx absorbent catalyst (17), and
wherein the temperature of said high temperature reducing atmosphere is set higher than the SOx desorption temperature of the NOx absorbent catalyst (17) to desorb SOx that has been absorbed to the NOx absorbent catalyst, but is set such as to not desorb SOx from the SOx absorbent,
said exhaust emission purification system for an internal combustion engine (1) further comprising one of:
an SOx concentration detecting means (16) for detecting SOx concentration in the exhaust gas that circulates between the SOx absorbent (13) and the NOx absorbent catalyst (17) in the exhaust passage (4), wherein the determination of the regeneration determination means (20) is based on the SOx concentration detected by the SOx concentration detecting means (16);
an NOx concentration detecting means (16A) for detecting NOx concentration in the exhaust gas that circulates in a downstream side of the NOx absorbent catalyst (17) in the exhaust passage (4), wherein the determination of the regeneration determination means (20A) is based on the NOx concentration detected by the NOx concentration detecting means; and
an air-fuel ratio detecting means (16B) for detecting an air-fuel ratio in the exhaust gas that circulates in a downstream side of the NOx absorbent catalyst (17) in the exhaust passage (4), wherein the determination of the regeneration determination means (20B) is based on the air-fuel ratio detected by the air-fuel ratio detecting means (16B).

2. The exhaust emission purification system for an internal combustion engine (1) according to claim 1, wherein the SOx absorbent (13) does not substantially comprise precious metals.

3. The exhaust emission purification system for an internal combustion engine (1) according to claim 1 or 2, wherein a substrate of the SOx absorbent (13) does not substantially comprise silica.

4. The exhaust emission purification system for an internal combustion engine (1) according to any one of claims 1 to 3, wherein the NOx absorbent catalyst (17) is a catalyst which generates ammonia and absorbs the generated ammonia when the air-fuel ratio of the exhaust gas is rich, and which reduces NOx to elements thereof with the absorbed ammonia when the air-fuel ratio of the exhaust gas is lean.

5. The exhaust emission purification system for an internal combustion engine (1) according to claim 4, wherein a three-way catalyst (11) is disposed in an upstream side of the SOx absorbent (13) in the exhaust passage (4).

## Patentansprüche

1. Abgasemissionsreinigungssystem für einen Verbrennungsmotor (1), umfassend:
einen NOx-Absorptionskatalysator (17), welcher in einem - Abgasdurchgang (4) von dem Verbrennungsmotor (1) angeordnet ist, wobei das Absorptionsmittel NOx in Abgas absorbiert;
ein SOx-Absorptionsmittel (13), welches an einer stromaufwärtigen Seite von dem NOx-Absorptionskatalysator (17) in dem Abgasdurchgang (4) angeordnet ist, wobei dass Absorptionsmittel SOx in dem Abgas absorbiert;
ein Regenerationsbestimmungsmittel (20; 20A; 20B), um zu bestimmen, ob ein Regenerationsprozess für den NOx-Absorptionskatalysator (17) durchzuführen ist, um SOx zu desorbieren, welches in dem NOx-Absorptionskatalysator (17) absorbiert wurde; und
ein Regenerationsdurchführungsmittel (20; 20A; 20B), um das Abgas in eine Hochtemperaturreduktionsatmosphäre zu verändern in Fällen, wo das Regenerationsbestimmungsmittel (20; 20A; 20B) bestimmt, den Regenerationsprozess für den NOx-Absorptionskatalysator (17) durchzuführen;
wobei eine SOx-Desorptionstemperatur von dem SOx-Absorptionsmittel (13) höher ist als eine SOx-Desorptionstemperatur von dem NOx-Absorptionskatalysator (17), und
wobei die Temperatur von der Hochtemperaturreduktionsatmosphäre höher eingestellt ist als die SOx-Desorptionstemperatur von dem NOx-Absorptionskatalysator (17), um SOx zu desorbieren, welches von dem NOx-Absorptionskatalysator absorbiert wurde, aber so eingestellt ist, dass kein SOx von dem SOx-Absorptionsmittel desorbiert wird, wobei das Abgasemissionsreinigungssystem für einen Verbrennungsmotor (1) fernen eines der folgenden Mittel umfasst:
ein SOx-Konzentrationserfassungsmittel (16), um eine SOx-Konzentration in dem Abgas zu erfassen, welches zwischen dem SOx-Absorptionsmittel (13) und dem NOx-Absorptionskatalysator (17) in dem Abgasdurchgang (4) zirkuliert, wobei die Bestimmung von dem Regenerationsbestimmungsmittel (20) auf der SOx-Konzentration basiert, welche von dem SOx-Konzentrationserfassungsmittel (16) erfasst wird;
ein NOx-Konzentrationserfassungsmittel (16A), um eine NOx-Konzentration in dem Abgas zu erfassen, welches auf einer stromabwärtigen Seite von dem NOx-Absorptionskatalysator (17) in dem Abgasdurchgang (4) zirkuliert, wobei die Bestimmung von dem Regenerationsbestimmungsmittel (20A) auf der NOx-Konzentration basiert, welche von dem NOx-Konzentrationserfassungsmittel erfasst wird; und
ein Luft-Kraftstoff-Verhältnis-Erfassungsmittel (16B), um ein Luft-Kraftstoff-Verhältnis in dem Abgas zu erfassen, welches auf einer stromabwärtigen Seite von dem NOx-Absorptio.nskatalysator (17) in dem Abgasdurchgang (4) zirkuliert, wobei die Bestimmung von dem Regenerationsbestimmungsmittel (20B) auf dem Luft-Kraftstoff-Verhältnis basiert, welches von dem Luft-Kraftstoff-Verhältnis-Erfassungsmittel (16B) erfasst wird.

2. Abgasemissionsreinigungssystem für einen Verbrennungsmotor (1) nach Anspruch 1, wobei das SOx-Absorptionsmittel (13) im Wesentlichen keine Edelmetalle umfasst.

3. Abgasemissionsreinigungssystem für einen Verbrennungsmotor (1) nach Anspruch 1 oder 2, wobei ein Substrat von dem SOx-Absorptionsmittel (13) im Wesentlichen kein Siliziumoxid umfasst.

4. Abgasemissionsreinigungssystem für einen Verbrennungsmotor (1) nach einem der Ansprüche 1 bis 3, wobei der NOx-Absorptionskatalysator (17) ein Katalysator ist, welcher Ammoniak erzeugt und das erzeugte Ammoniak absorbiert, wenn das Luft-Kraftstoff-Verhältnis von dem Abgas fett ist, und welcher NOx mit dem absorbierten Ammoniak zu dessen Elementen reduziert, wenn das Luft-Kraftstoff-Verhältnis von dem Abgas mager ist.

5. Abgasemissionsreinigungssystem für einen Verbrennungsmotor (1) nach Anspruch 4, wobei ein Drei-Wege-Katalysator (11) auf einer stromaufwärtigen Seite von dem SOx-Absorptionsmittel (13) in dem Abgasdurchgang (4) angeordnet ist.

## Revendications

1. Système de purification d'émissions d'échappement pour un moteur à combustion interne (1), comprenant
un catalyseur absorbant le NOx (17) disposé dans un passage de gaz d'échappement (4) du moteur à combustion interne (1), l'absorbant absorbant le NOx dans le gaz d'échappement ;
un absorbant de Sox (13) disposé en amont du catalyseur absorbant le NOx (17) dans le passage de gaz d'échappement (4), l'absorbant absorbant le SOx dans le gaz d'échappement ;
un moyen de détermination de la régénération (20 ; 20A ; 20B) pour déterminer si l'on exécute un processus de régénération du catalyseur absorbant le NOx (17) de façon à désorber le SOx qui a été absorbé dans le catalyseur absorbant le NOx (17) ; et
un moyen d'exécution de la régénération (20 ; 20A ; 20B) pour changer les gaz d'échappement en une atmosphère de réduction de la température élevée si le moyen de détermination de la régénération (20 ; 20A ; 20B) détermine l'exécution du processus de régénération du catalyseur absorbant le NOx (17) ;
dans lequel une température de désorption du SOx de l'absorbant de SOx (13) est supérieure à la température de désorption du SQx du catalyseur absorbant le NOx (17), et
dans lequel la température de ladite atmosphère de réduction de la température élevée est fixée à un niveau supérieur à la température de désorption de SOx du catalyseur absorbant le NOx (17) pour désorber le SOx qui a été absorbé dans le catalyseur absorbant du NOx mais est fixée de façon à ne pas désorber le SOx de l'absorbant de SOx,
ledit système de purification d'émission de gaz d'échappement pour un moteur à combustion interne (1) comprenant en outre l'un des éléments suivants :
un moyen de détection de la concentration de SOx (16) pour détecter la concentration de SOx dans le gaz d'échappement qui circule entre l'absorbant de SOx (13) et le catalyseur absorbant le NOx (17) dans le passage des gaz d'échappement (4), dans lequel la détermination du moyen de détermination de la régénération (20) est basée sur la concentration de SOx détectée par le moyen de détection de la concentration de SOx (16) ;
un moyen de détection de la concentration de NOx (16A) pour détecter la concentration de NOx dans le gaz d'échappement qui circule en aval du catalyseur absorbant le NOx (17) dans le passage des gaz d'échappement (4), dans lequel la détermination du moyen de détermination de la régénération (20A) est basée sur la concentration de NOx détectée par le moyen de détection de la concentration de NOx ; et
un moyen de détection du rapport air - carburant (16B) pour détecter un rapport air - carburant dans le gaz d'échappement qui circule en aval du catalyseur absorbant le NOx (17) dans le passage des gaz d'échappement (4), dans lequel la détermination du moyen de détermination de la régénération (20B) est basée sur le rapport air - carburant détecté par le moyen de détection du rapport air - carburant (16B).

2. Système de purification d'émissions d'échappement pour un moteur à combustion interne (1) selon la revendication 1, dans lequel l'absorbant de SOx (13) ne comprend substantiellement pas de métaux précieux.

3. Système de purification d'émissions d'échappement pour un moteur à combustion interne (1) selon la revendication 1 ou 2, dans lequel un substrat de l'absorbant de SOx (13) ne comprend substantiellement pas de silice.

4. Système de purification d'émissions d'échappement pour un moteur à combustion interne (1) selon l'une quelconque des revendications 1 à 3, dans lequel le catalyseur absorbant le NOx (17) est un catalyseur qui génère de l'ammoniac et absorbe l'ammoniac généré lorsque le rapport air - carburant du gaz d'échappement est riche et qui réduit le NOx à ses éléments avec l'ammoniac absorbé lorsque le rapport air - carburant du gaz d'échappement est pauvre.

5. Système de purification d'émissions d'échappement pour un moteur à combustion interne (1) selon la revendication 4, dans lequel un catalyseur à trois voies (11) est disposé en amont de l'absorbant de SOx (13) dans le passage des gaz d'échappement (4).
